# EUROPÄISCHE PATENTSCHRIFT

(11) **EP 3 001 383 B1**
(45) Veröffentlichungstag und Bekanntmachung des Hinweises auf die Patenterteilung: **01.07.2020**
(21) Anmeldenummer: 15184109.5
(22) Anmeldetag: 07.09.2015
(51) Int. Cl.: G06T 7/80

(54) **KALIBRATION VON SURROUND-VIEW-SYSTEMEN**
CALIBRATION OF SURROUND VIEW SYSTEMS
ÉTALONNAGE DE SYSTÈME DE VUE ENVIRONNANTE

(30) Priorität: 08.09.2014 DE 102014217939
(43) Veröffentlichungstag der Anmeldung: 30.03.2016
(73) Patentinhaber: Continental Automotive GmbH, 30165 Hannover (DE)
(72) Erfinder: von Rosenberg, Harald, 88138 Sigmarszell (DE); Schinko, Thomas, 78087 Mönchweiler (DE)

(56) Entgegenhaltungen:
- US-A1- 2010 194 886
- US-A1- 2012 320 190
- US-A1- 2014 247 354
- XIANG ZHANG ET AL: "Visual marker detection and decoding in ar systems: a comparative study", PROCEEDINGS / INTERNATIONAL SYMPOSIUM ON MIXED AND AUGMENTED RALITY : ISMAR 2002 ; SEPTEMBER 30 - OCTOBER 1,2002, DARMSTADT, GERMANY, IEEEE COMPUTER SOCIETY, LOS ALAMITOS, CALIF. [U.A.], 30. September 2002 (2002-09-30), Seiten 97-106, XP010620946, ISBN: 978-0-7695-1781-0
- Sanni Siltanen: "Theory and applications of marker-based augmented reality", , 1 June 2012 (2012-06-01), pages 1-250, XP055181387, ISBN: 978-9-51-387450-6 Retrieved from the Internet: URL:http://www.vtt.fi/inf/pdf/science/2012 /S3.pdf [retrieved on 2015-04-07]

## Beschreibung

### Technisches Gebiet

Die Erfindung betrifft die Kalibration von Surround-View-Systemen. Insbesondere betrifft die Erfindung ein Surround-View-System, ein Fahrzeug mit einem Surround-View-System sowie ein Verfahren zum Kalibrieren eines Surround-View-Systems.

### Technischer Hintergrund

Moderne Fahrzeuge können mit Surround-View-Systemen bzw. Rundumsichtsystemen ausgestattet sein, die es dem Fahrer erlauben, eine Umgebung des Fahrzeuges auf einem Bildschirm zu überwachen, um beim Bewegen des Fahrzeuges die Umgebung des Fahrzeuges in Sicht zu haben. Hierfür weist das Fahrzeug üblicherweise eine Mehrzahl von Kameras auf, deren Bilder für die Darstellung auf dem Bildschirm zusammengefügt bzw. gestitcht werden. Das Zusammenfügen der einzelnen Bilder bzw. das Surround-View-System kann kalibriert werden, indem Markierflächen in der Fahrzeugumgebung ausgelegt werden, die Punkte definieren, an denen die einzelnen Bilder zusammengefügt werden können.

Die US 2014/0247354 A1 zeigt ein Surround-View-System bei dem zwei Kameras unterschiedliche Markierflächen aufnehmen, die zum Kalibrieren verwendet werden.

Eine Kamerakalibrierungsvorrichtung, ein mit einer Vielzahl von Kameras ausgestattetes Fahrzeug und ein Kamerakalibrierungsverfahren offenbart US 2010/0194886 A1. Bei dem Kamerakalibrierungsverfahren wird ein Anordnungszustand eines Kalibrierungsmusters geprüft.

### Zusammenfassung der Erfindung

Es ist eine Aufgabe der Erfindung, ein verbessertes Surround-View-System bereitzustellen, das zuverlässiger kalibriert werden kann.

Die Aufgabe wird durch die Gegenstände der unabhängigen Ansprüche gelöst. Weiterbildungen und Ausführungsformen sind den abhängigen Ansprüchen, der nachfolgenden Beschreibung und den Figuren zu entnehmen.

Ein erster Aspekt der Erfindung betrifft ein Surround-View-System für ein Fahrzeug, welches eine erste Kamera zum Aufnehmen eines ersten Bildes der Fahrzeugumgebung, welche eine Markierfläche mit einem achsenasymmetrischen und/oder punktasymmetrischen Bereich aufweist, umfasst. Ferner umfasst das Surround-View-System eine zweite Kamera zum Aufnehmen eines zweiten Bildes der Fahrzeugumgebung, welche die Markierfläche aufweist, sowie eine Steuereinrichtung zum Zusammenfügen des ersten und zweiten Bildes und zum Kalibrieren des Surround-View-Systems. Die Steuereinrichtung ist dazu ausgeführt, zum Kalibrieren in dem ersten Bild und dem zweiten Bild jeweils die Markierfläche zu suchen und nur diejenigen im ersten und zweiten Bild aufgefundenen Markierflächen zum Kalibrieren des Surround-View-Systems zu verwenden, deren achsenasymmetrische und/oder punktasymmetrische Bereiche im Vergleich zu der Markierfläche der Fahrzeugumgebung nicht gespiegelt sind.

Der Erfindung liegt unter anderem die Erkenntnis zu Grunde, dass sich Markierflächen in unterschiedlichen Objekten, wie zum Beispiel einer Scheibe oder einer Seitenwand des Fahrzeuges oder aber auch in Scheiben von Gebäuden spiegeln können. Solche Spiegelungen können beim Kalibrieren des Surround-View-Systems Fehler verursachen.

Mit anderen Worten kann ein Kerngedanke der Erfindung darin gesehen werden, dass das Surround-View-System zwischen einer realen Markierfläche und dessen Spiegelung bzw. Spiegelbilder unterscheiden kann. Hierfür kann die Steuereinrichtung des Surround-View-Systems dazu konfiguriert sein, einen achsenasymmetrischen und/oder punktasymmetrischen Bereich zu erkennen und zu analysieren, ob dieser Bereich gespiegelt ist oder nicht. Durch diese Erkennung, ob eine Markierfläche gespiegelt ist oder nicht, können nur die ungespiegelten Markierflächen für das Zusammenfügen hergenommen werden bzw. für das Kalibrieren des Zusammenfügens hergenommen werden, so dass das Kalibrieren weniger fehleranfällig und zuverlässiger ist, wodurch insgesamt ein besseres Surround-View-System bereitgestellt wird.

Im Kontext der Erfindung kann unter einem Surround-View-System ein Rundumsichtsystem verstanden werden, welches ein Bild der Fahrzeugumgebung auf einem Bildschirm, wobei das dargestellte Bild aus zumindest einem ersten Bild und einem zweiten Bild, die von einer ersten und zweiten Kamera aufgenommen worden sind, zusammengefügt wird. Das Fahrzeug kann ein Kraftfahrzeug sein, zum Beispiel ein Personenkraftwagen, ein Lastkraftwagen, ein Omnibus, ein Nutzfahrzeug, ein Landwirtschaftsfahrzeug, ein Baufahrzeug. Ferner kann das Fahrzeug auch ein Schiff, z.B. ein Fähre, sein. Die erste und zweite Kamera des Surround-View-Systems können als Kamera ausgeführt sein, welche Licht im sichtbaren Bereich aufnehmen können. Ferner können die erste und zweite Kamera auch dazu ausgeführt sein, Licht im Infrarotbereich aufzunehmen. Dabei sind die erste und zweite Kamera dazu ausgeführt bzw. derart ausgerichtet, dass sie ein erstes Bild bzw. ein zweites Bild der Fahrzeugumgebung aufnehmen können. Dabei können unter dem ersten Bild bzw. unter dem zweiten Bild erste bzw. zweite Bilddaten verstanden werden, die eine optische Information zur Fahrzeugumgebung enthalten. Das erste und zweite Bild der Umgebung können dabei nur teilweise überlappend sein, wobei die Markierfläche sich im überlappenden Bereich befinden kann. Es ist ebenfalls möglich, dass ein Teil der Markierfläche nur von einer einzelnen Kamera erfasst wird.

Unter der Markierfläche kann im Kontext der Erfindung ein sogenannter Marker verstanden werden, der in der Fahrzeugumgebung ausgelegt werden kann und vom Surround-View-System bzw. von der Steuereinrichtung des Surround-View-Systems zum Konfigurieren des Surround-View-Systems erkannt werden kann. Dabei kann die Steuereinrichtung dazu ausgeführt sein, eine Markierfläche zu suchen bzw. zu erkennen, die einen achsenasymmetrischen und/oder einen punktasymmetrischen Bereich aufweist. Unter dem achsenasymmetrischen Bereich kann im Kontext der Erfindung ein Bereich verstanden werden, für den es keine Achse gibt, entlang welcher der Bereich spiegelsymmetrisch ist. Unter einem punktasymmetrischen Bereich kann ein Bereich verstanden werden, für welchen es keinen Punkt gibt, bezüglich welchem der Bereich punktsymmetrisch ist.

Die Steuereinrichtung kann dazu ausgeführt sein, das erste Bild und das zweite Bild zusammenzufügen und das Zusammenfügen des ersten und zweiten Bildes zu kalibrieren. Dabei ist das Zusammenfügen dem Fachmann auch unter dem Begriff des Stitchings bekannt. Damit kann aus dem ersten und zweiten Bild eine Rundumsicht des Fahrzeuges erzeugt werden, welche beispielsweise in der Vogelperspektive dargestellt ist. Dabei kann die Steuereinrichtung auch dazu ausgeführt sein, aus den Bilddaten die Vogelperspektive oder eine andere Perspektive zu erzeugen.

Unter dem Kalibrieren kann auch ein Justieren des Zusammenfügens des ersten und zweiten Bildes verstanden werden, so dass sich überschneidende Bereiche des ersten und zweiten Bildes übereinander liegen. Die Steuereinrichtung kann beispielsweise dazu ausgeführt sein, die Markierfläche in dem ersten Bild und dem zweiten Bild mittels Bildverarbeitung und/oder Musterkennungsalgorithmen zu suchen. Beispielsweise kann in der Steuereinrichtung die reale Ausgestaltung der Markierfläche hinterlegt sein, so dass die Steuereinrichtung die aufgefundenen Markierflächen mit der hinterlegten Markierfläche vergleichen kann.

Indem die Steuereinrichtung nur diejenigen Markierflächen für das Kalibrieren verwendet, deren achsenasymmetrische und/oder punktasymmetrische Bereiche im Vergleich zu der Markierfläche der Fahrzeugumgebung nicht gespiegelt sind, können Markierflächen, die sich beispielsweise in der Frontscheibe, in einem Rückspiegel, in einer Seitenwand oder in anderen Bauteilen des Fahrzeuges spiegeln, für die Kalibrierung ausgeschlossen werden. Ferner können auch Spiegelungen in Gebäuden für die Kalibrierung ausgeschlossen werden.

Gemäß einer beispielhaften Ausführungsform der Erfindung ist die Steuereinrichtung dazu ausgeführt, das Surround-View-System derart zu kalibrieren, dass eine erste Markierfläche des ersten Bildes mit einer zweiten Markierfläche der zweiten Fläche übereinstimmt.

Beispielsweise kann eine Markierfläche in der Fahrzeugumgebung ausgelegt sein, die in einem Bereich liegt, der sowohl im ersten Bild als auch im zweiten Bild enthalten ist. Die Steuereinrichtung kann nun das erste Bild und das zweite Bild zusammenfügen und das Zusammenfügen kalibrieren, indem überprüft wird, dass die aufgefundene Markierfläche im ersten Bild und die aufgefundene Markierfläche im zweiten Bild übereinstimmen. Mit anderen Worten kann überprüft werden, dass die erste aufgefundene Markierfläche und die zweite aufgefundene Markierfläche übereinander liegen.

Gemäß der Erfindung ist die Steuereinrichtung dazu ausgeführt, in dem ersten Bild und dem zweiten Bild jeweils eine Markierfläche mit vier quadratisch angeordneten Markiersymbolen sowie dem in der Mitte der vier Markiersymbole angeordneten achsenasymmetrischen und/oder punktasymmetrischen Bereich zu suchen und zum Kalibrieren zu verwenden.

Es kann hierbei vorteilhaft sein, wenn die Markierfläche aus möglichst robust und zuverlässig erkennbaren geometrischen Grundfiguren und einem zusätzlichen Indikator für die Spiegelbilderkennung zusammengesetzt ist. Somit kann in einem ersten Schritt die Grundfigur erkannt und identifiziert werden und in einem zweiten Schritt, mit verfeinertem Ansatz und verfeinerten Methoden, kann der Spiegelbild-Indikator geprüft werden. Insbesondere bei langen Fahrzeugen, wenn die Markierfläche im Kamerabild klein erscheint, und unter wechselnden Umgebungsbedingungen (z.B. Beleuchtung, Schattenbildung) können die zusätzlichen Markiersymbole der Markierfläche die Zuverlässigkeit der Erkennung der Markierfläche erhöhen.

Gemäß einer weiteren beispielhaften Ausführungsform der Erfindung ist die Steuereinrichtung dazu ausgeführt, eine Markierfläche mit einem als Buchstaben, als Ziffer oder als Sonderzeichen ausgestalteten achsenasymmetrischen und/oder punktasymmetrischen Bereich zu suchen und zum Kalibrieren zu verwenden.

Indem ein achsenasymmetrischer und/oder punktasymmetrischer Bereich in Form eines Buchstabens, einer Ziffer oder eines Sonderzeichens verwendet wird, können zuverlässige und schnelle Zeichenerkennungsalgorithmen verwendet werden.

Gemäß einer weiteren beispielhaften Ausführungsform der Erfindung ist die Steuereinrichtung dazu ausgeführt, in dem ersten Bild und dem zweiten Bild jeweils eine Markierfläche mit einer Mehrzahl von achsenasymmetrischen und/oder punktasymmetrischen Bereichen zu suchen und zum Kalibrieren zu verwenden.

Gemäß einer weiteren beispielhaften Ausführungsform der Erfindung ist die Steuereinrichtung dazu ausgeführt, die Markierfläche in einer beliebigen Rotation bezüglich des Fahrzeuges zu suchen.

Mit anderen Worten kann die Markierfläche mit einer beliebigen Rotation bezüglich des Fahrzeuges in der Umgebung des Fahrzeuges ausgelegt werden. Die Steuereinrichtung muss daher nicht davon abhängig sein, in welcher Orientierung die Markierfläche ausgelegt wird. Somit kann das Kalibrieren des Surround-View-Systems vereinfacht und zuverlässiger gestaltet werden.

Gemäß einer weiteren beispielhaften Ausführungsform der Erfindung ist die Steuereinrichtung dazu ausgeführt, für jede in dem ersten und zweiten Bild aufgefundene Markierfläche zu bestimmen, ob die jeweilige aufgefundene Markierfläche im Vergleich zu der Markierfläche der Fahrzeugumgebung gespiegelt oder nicht gespiegelt ist.

Dies kann die Steuereinrichtung beispielsweise durch Analyse der achsenasymmetrischen und/oder punktasymmetrischen Bereiche der Markierfläche erreichen.

Ein weiterer Aspekt der Erfindung betrifft ein Fahrzeug mit einem im Kontext der Erfindung beschriebenen Surround-View-System. Das Fahrzeug kann dabei ein Kraftfahrzeug sein, zum Beispiel ein Personenkraftwagen, Lastkraftwagen, Omnibus, Nutzfahrzug, Landwirtschaftsfahrzeug, oder Baufahrzeug. Ferner kann das Fahrzeug auch ein Schiff, wie zum Beispiel eine Fähre, sein.

Ein weiterer Aspekt der Erfindung betrifft ein Verfahren zum Kalibrieren eines Surround-View-Systems, welches den Schritt des Erzeugens eines ersten Bildes einer Fahrzeugumgebung, welche eine Markierfläche mit einem achsenasymmetrischen und/oder einem punktasymmetrischen Bereich aufweist, und eines zweiten Bildes der Fahrzeugumgebung, welche die Markierfläche aufweist, umfasst. Ferner umfasst das Verfahren den Schritt des Suchens der Markierfläche in dem ersten Bild und in dem zweiten Bild sowie den Schritt des Kalibrierens des Surround-View-Systems, wobei nur diejenigen in dem ersten und dem zweiten Bild aufgefundenen Markierflächen zum Kalibrieren verwendet werden, deren achsenasymmetrische und/oder punktasymmetrische Bereiche im Vergleich zu der Markierfläche der Fahrzeugumgebung nicht gespiegelt sind.

Das Verfahren wird durch eine Steuereinrichtung eines im Kontext der Erfindung beschriebenen Surround-View-Systems durchgeführt. Daher kann das Verfahren weitere Schritte aufweisen, die im Kontext des Verfahrens beschrieben sind. Ferner können die Schritte des Verfahrens in der genannten Reihenfolge oder in einer anderen Reihenfolge oder zum Teil auch parallel zueinander durchgeführt werden.

Weitere Merkmale, Vorteile und Anwendungsmöglichkeiten der Erfindung ergeben sich aus der nachfolgenden Beschreibung der Ausführungsbeispiele und Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen.

### Kurze Beschreibung der Figuren

Fig. 1 zeigt ein Fahrzeug mit einem Surround-View-System gemäß einem Ausführungsbeispiel der Erfindung.
Fig. 2 zeigt ein Bild, das von einer Kamera eines Surround-View-Systems gemäß einem Ausführungsbeispiel der Erfindung aufgenommen wurde.
Fig. 3 zeigt eine Markierfläche, die zum Kalibrieren eines Surround-View-Systems gemäß einem Ausführungsbeispiel der Erfindung verwendet werden kann.
Fig. 4 zeigt eine Markierfläche, die zum Kalibrieren eines Surround-View-Systems gemäß einem Ausführungsbeispiel der Erfindung verwendet werden kann.
Fig. 5 zeigt ein Flussdiagramm für ein Verfahren zum Kalibrieren eines Surround-View-Systems gemäß einem Ausführungsbeispiel der Erfindung.

Die Figuren sind schematisch und nicht maßstabsgetreu dargestellt. Sind in der nachfolgenden Beschreibung in verschiedenen Figuren die gleichen Bezugszeichen angegeben, so bezeichnen diese gleiche oder ähnliche Elemente. Gleiche oder ähnliche Elemente können aber auch mit unterschiedlichen Bezugszeichen bezeichnet sein.

### Detaillierte Beschreibung von Ausführungsbeispielen

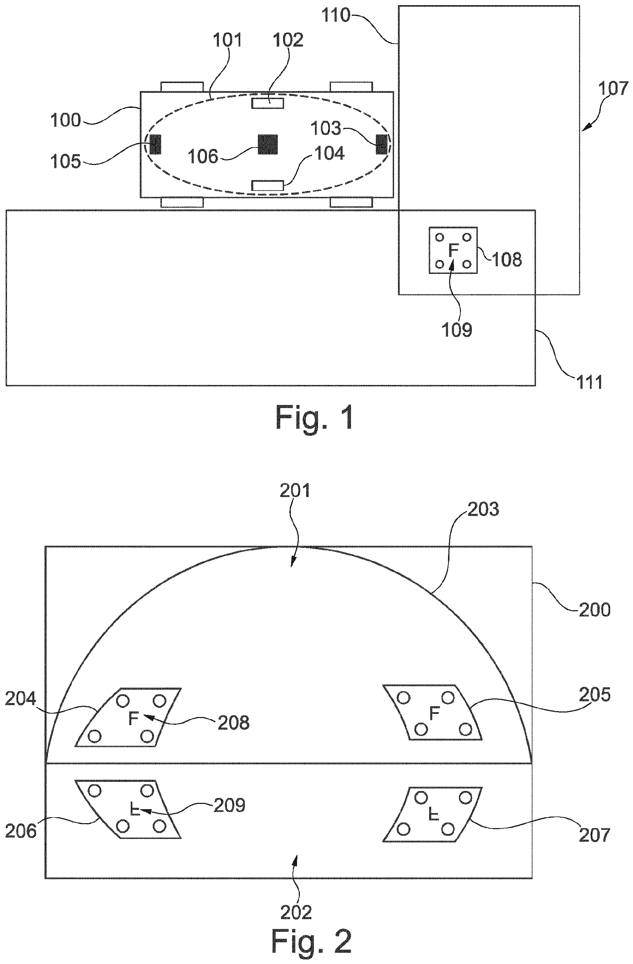

In Fig. 1 ist ein Fahrzeug 100 mit einem Surround-View-System 101 gemäß einem Ausführungsbeispiel der Erfindung dargestellt. Das Surround-View-System 101 umfasst Kameras 102, 103, 104 und 105 sowie eine Steuereinrichtung 106. Die Kameras 102 bis 105 sind jeweils dazu ausgeführt, ein Bild von der Umgebung des Fahrzeuges 101 zu erzeugen, die anschließend von der Steuereinrichtung 106 zu einer Rundumsicht zusammengefügt werden. In diesem Beispiel ist das beispielhaft für ein erstes Bild 110 der Kamera 103 und ein zweites Bild 111 der Kamera 104 dargestellt, wobei dies jedoch auch auf eine größere Anzahl von Bildern verallgemeinert werden kann. In der Fahrzeugumgebung 107 ist zum Kalibrieren des Surround-View-Systems 101 eine Markierfläche 108 ausgelegt, die einen achsenasymmetrischen Bereich 109 aufweist, der beispielsweise als "F" ausgestaltet ist. Dabei ist die Markierfläche 108 in einem Bereich der Fahrzeugumgebung 107 platziert, so dass die Markierfläche 108 sowohl im ersten Bild 110 der ersten Kamera 103 als auch im zweiten Bild 111 der zweiten Kamera 104 enthalten ist.

In diesem Ausführungsbeispiel sind das erste Bild und das zweite Bild der Einfachheit halber als Rechteck dargestellt. Die Bilder der Kameras können im Kontext der Erfindung jedoch je nach Kamera unterschiedliche Sichtbereiche aufweisen bzw. Ausschnitte der Fahrzeugumgebung 107 enthalten. Die Steuereinrichtung ist zum Kalibrieren des Surround-View-Systems 101 dazu ausgeführt, in dem ersten Bild 110 die Markierfläche 108 sowie in dem zweiten Bild 111 die Markierfläche 108 zu suchen. Um sicherzustellen, dass keine Spiegelungen der Markierfläche verwendet werden, die sich beispielsweise in der Frontscheibe des Fahrzeuges 100 oder in einem anderen Bauteil des Fahrzeuges 100 oder in einem anderen Gebäude spiegeln können, ist die Steuereinrichtung dazu ausgeführt, zu untersuchen, ob der achsenasymmetrische und/oder punktasymmetrische Bereich 109 gespiegelt ist oder nicht, und nur diejenigen Markierflächen für das Kalibrieren zu verwenden, deren achsenasymmetrische und/oder punktasymmetrische Bereiche nicht gespiegelt sind. Dies ist beispielsweise im Kontext von Fig. 2 gezeigt und detaillierter beschrieben.

In Fig. 2 ist ein Bild 200 einer Fahrzeugumgebung dargestellt, welches von einer Kamera eines Surround-View-Systems gemäß einem Ausführungsbeispiel der Erfindung aufgenommen wurde. In dem Bild ist die Fahrzeugumgebung 201 zu sehen, wobei die Linie 203 den Horizont der Umgebung darstellt. Außerdem ist die Frontscheibe 202 des Fahrzeuges zu sehen. Ferner sind vier Markierflächen 204, 205, 206 und 207 in dem Bild 200 dargestellt. Um das Bild 200 mit einem zweiten, hier nicht dargestellten Bild zusammenzufügen und dieses Zusammenzufügen zu kalibrieren, ist die Steuereinrichtung des Surround-View-Systems dazu ausgeführt, die Markierflächen 204 bis 207 in dem Bild 200 zu suchen, und nur diejenigen Markierflächen zu verwenden, die nicht gespiegelt sind. Mit anderen Worten soll die Steuereinrichtung des Surround-View-Systems dazu ausgeführt sein, die Spiegelungen 206 und 207 auszuschließen und nicht für das Kalibrieren des Surround-View-Systems zu verwenden. Dies kann durch die Steuereinrichtung derart erfolgen, dass die Steuereinrichtung überprüft, ob der achsenasymmetrische und/oder spiegelasymmetrische Bereich 208 bzw. 209 der Markierfläche 204 bzw. 206 gespiegelt oder nicht gespiegelt ist. Beispielsweise kann in der Steuereinrichtung hinterlegt sein, wie die reale Markierfläche auszusehen hat, so dass die Steuereinrichtung überprüfen kann, welche aufgefundene Markierfläche gespiegelt ist. Auf diese Weise kann die Steuereinrichtung erkennen, dass die achsenasymmetrischen und/oder punktasymmetrischen Bereiche 209 der Markierflächen 206 und 207 gespiegelt sind, so dass die Markierflächen 206 und 207 für die Kalibrierung ausgeschlossen werden können.

In Fig. 2 ist das Entstehen von Spiegelbildern anhand vom Beispiel der Frontscheibe des Fahrzeuges dargestellt. Dasselbe ist jedoch auch für die Seiten- bzw. Rückwand eines Lkws möglich. Ferner können sich Markierflächen auch in Rückspiegeln oder in Gebäuden der Fahrzeugumgebung spiegeln, so dass diese auf die gleiche Art und Weise für die Kalibrierung ausgeschlossen werden können.

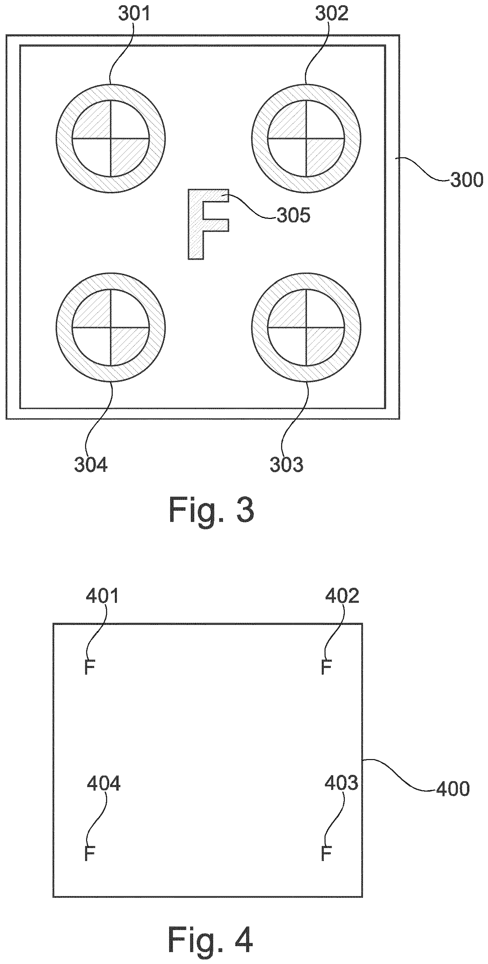

In Fig. 3 ist eine Markierfläche 300 dargestellt, die zum Kalibrieren eines Surround-View-Systems gemäß einem Ausführungsbeispiel der Erfindung verwendet werden kann. Die Markierfläche 300 umfasst vier quadratisch angeordnete, jeweils kreisförmig ausgestaltete Markiersymbole 301, 302, 303 und 304 sowie einen mittig angeordneten achsenasymmetrischen Bereich 305, der als Buchstabe "F" ausgestaltet ist.

In Fig. 4 ist eine weitere Markierfläche 400 dargestellt, die zum Kalibrieren eines Surround-View-Systems gemäß einem Ausführungsbeispiel der Erfindung verwendet werden kann. Gemäß diesem Ausführungsbeispiel weist die Markierfläche 400 vier quadratisch angeordnete, achsenasymmetrische Bereiche 401, 402, 404 und 403 auf.

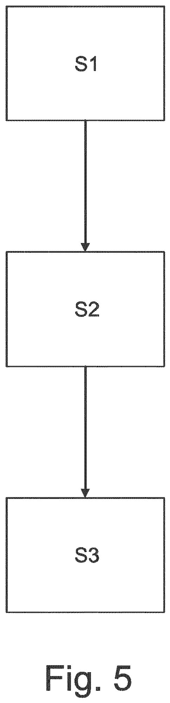

In Fig. 5 ist ein Flussdiagramm für ein Verfahren zum Kalibrieren eines Surround-View-Systems gemäß einem Ausführungsbeispiel der Erfindung dargestellt. Das Verfahren beinhaltet den Schritt des Erzeugens eines ersten Bildes einer Fahrzeugumgebung, welcher einer Markierfläche mit einem achsenasymmetrischen und/oder punktasymmetrischen Bereich aufweist und eines zweiten Bildes der Fahrzeugumgebung, welche die Markierfläche aufweist. Ferner umfasst das Verfahren den Schritt S2 des Suchens der Markierfläche in dem ersten Bild und in dem zweiten Bild sowie den Schritt S3 des Kalibrierens des Surround-View-Systems, wobei nur diejenigen in dem ersten und dem zweiten Bild aufgefundenen Markierflächen zum Kalibrieren verwendet werden, deren achsenasymmetrische und/oder punktasymmetrische Bereiche im Vergleich zu der Markierfläche der Fahrzeugumgebung nicht gespiegelt sind.

Ergänzend sei darauf hinzuweisen, dass "umfassend" oder "aufweisend" keine anderen Elemente ausschließt und "ein" oder "einer" keine Vielzahl ausschließt. Ferner sei darauf hingewiesen, dass Merkmale, die mit Verweis auf eines der obigen Ausführungsbeispiele oder Ausführungsformen beschrieben worden sind, auch in Kombination mit anderen Merkmalen anderer oben beschriebener Ausführungsbeispiele oder Ausführungsformen verwendet werden können. Bezugszeichen in den Ansprüchen sind nicht als Einschränkungen anzusehen.

## Patentansprüche

1. Surround-View-System (101) für ein Fahrzeug (100), aufweisend:
eine erste Kamera (103) zum Aufnehmen eines ersten Bildes (110) der Fahrzeugumgebung (107), welche eine Markierfläche (108) mit einem asymmetrischen Bereich (109) aufweist, für den es keine Achse gibt, entlang welcher der Bereich spiegelsymmetrisch ist und / oder für den es keinen Punkt gibt, bezüglich welchem der Bereich punktsymmetrisch ist;
eine zweite Kamera (104) zum Aufnehmen eines zweiten Bildes (111) der Fahrzeugumgebung, welche die Markierfläche aufweist;
eine Steuereinrichtung (106) zum Zusammenfügen des ersten und zweiten Bildes und zum Kalibrieren des Surround-View-Systems;
wobei die Steuereinrichtung (106) dazu ausgeführt ist, zum Kalibrieren in dem ersten Bild und dem zweiten Bild jeweils die Markierfläche (108) zu suchen;
wobei die Steuereinrichtung dazu ausgeführt ist, nur diejenigen im ersten und zweiten Bild aufgefundenen Markierflächen zum Kalibrieren des Surround-View-Systems zu verwenden, deren asymmetrische Bereiche im Vergleich zu der Markierfläche der Fahrzeugumgebung nicht gespiegelt sind und wobei die Steuereinrichtung (106) dazu ausgeführt ist, in dem ersten Bild und dem zweiten Bild jeweils eine Markierfläche (300) mit vier quadratisch angeordneten Markiersymbolen (301, 302, 303, 304) sowie dem in der Mitte der vier Markiersymbole angeordneten asymmetrischen Bereich (305) zu suchen und zum Kalibrieren zu verwenden.

2. Surround-View-System (101) nach Anspruch 1, wobei die Steuereinrichtung (106) dazu ausgeführt ist, das Surround-View-System derart zu kalibrieren, dass eine im ersten Bild aufgefundene Markierfläche mit einer im zweiten Bild aufgefundenen Markierfläche übereinstimmt.

3. Surround-View-System (101) nach einem der vorangehenden Ansprüche, wobei die Steuereinrichtung (106) dazu ausgeführt ist, eine Markierfläche (300) mit einem als Buchstaben, als Ziffer oder als Sonderzeichen ausgestalteten asymmetrischen Bereich (305) zu suchen und zum Kalibrieren zu verwenden.

4. Surround-View-System (101) nach einem der vorangehenden Ansprüche, wobei die Steuereinrichtung (106) dazu ausgeführt ist, in dem ersten Bild und dem zweiten Bild jeweils eine Markierfläche (400) mit einer Mehrzahl von asymmetrischen Bereichen zu suchen und zum Kalibrieren zu verwenden.

5. Surround-View-System (101) nach einem der vorangehenden Ansprüche, wobei die Steuereinrichtung (106) dazu ausgeführt ist, die Markierfläche in einer beliebigen Rotation bezüglich des Fahrzeuges zu suchen.

6. Surround-View-System (101) nach einem der vorangehenden Ansprüche, wobei die Steuereinrichtung (106) dazu ausgeführt ist, für jede in dem ersten und zweiten Bild aufgefundene Markierfläche zu bestimmen, ob die jeweilige aufgefundene Markierfläche im Vergleich zu der Markierfläche der Fahrzeugumgebung gespiegelt oder nicht gespiegelt ist.

7. Fahrzeug (100) mit einem Surround-View-System (101) nach einem der vorangehenden Ansprüche.

8. Verfahren zum Kalibrieren eines Surround-View-Systems (101) mit einer Steuereinrichtung (106) nach einem der Ansprüche 1 bis 6, wobei das Verfahren durch die Steuereinrichtung (106) durchgeführt wird, das Verfahren aufweisend die Schritte:
Erzeugen eines ersten Bildes einer Fahrzeugumgebung, welche eine Markierfläche mit einem asymmetrischen Bereich aufweist, für den es keine Achse gibt, entlang welcher der Bereich spiegelsymmetrisch ist und / oder für den es keinen Punkt gibt, bezüglich welchem der Bereich punktsymmetrisch ist, und eines zweiten Bildes der Fahrzeugumgebung, welche die Markierfläche aufweist (S1);
Suchen der Markierfläche in dem ersten Bild und in dem zweiten Bild (S2), wobei in einem ersten Schritt des Suchens eine Grundfigur einer Markierfläche erkannt und identifiziert wird und in einem zweiten Schritt des Suchens ein Spiegelbild-Indikator geprüft wird;
Kalibrieren des Surround-View-Systems, wobei nur diejenigen in dem ersten und zweiten Bild aufgefundenen Markierflächen zum Kalibrieren verwendet werden, deren asymmetrische Bereiche im Vergleich zu der Markierfläche der Fahrzeugumgebung nicht gespiegelt sind (S3); wobei die Steuereinrichtung (106) in dem ersten Bild und dem zweiten Bild jeweils eine Markierfläche (300) mit vier quadratisch angeordneten Markiersymbolen (301, 302, 303, 304) sowie dem in der Mitte der vier Markiersymbole angeordneten asymmetrischen Bereich (305) sucht und zum Kalibrieren verwendet.

## Claims

1. Surround-view system (101) for a vehicle (100), having:
a first camera (103) for recording a first image (110) of the vehicle environment (107) having a marking area (108) with an asymmetric region (109) for which there is no axis along which the region is mirror-symmetrical and/or for which there is no point with respect to which the region is point-symmetrical;
a second camera (104) for recording a second image (111) of the vehicle environment having the marking area;
a control device (106) for stitching the first and second image and for calibrating the surround-view system;
wherein the control device (106) is configured to search for the marking area (108) in each case in the first image and the second image for calibration purposes;
wherein the control device is configured to use only those marking areas found in the first and second image for calibrating the surround-view system whose asymmetric regions are not reflected as compared to the marking area of the vehicle environment and wherein the control device (106) is configured to search in the first image and the second image in each case for a marking area (300) with four marking symbols (301, 302, 303, 304) arranged in a square and the asymmetric region (305) arranged at the centre of the four marking symbols and to use it for calibration purposes.

2. Surround-view system (101) according to Claim 1, wherein the control device (106) is configured to calibrate the surround-view system such that a marking area found in the first image coincides with a marking area found in the second image.

3. Surround-view system (101) according to either of the preceding claims, wherein the control device (106) is configured to search for a marking area (300) having an asymmetric region (305) embodied as a letter, as a digit or as a special character and to use it for calibration purposes.

4. Surround-view system (101) according to one of the preceding claims, wherein the control device (106) is configured to search in the first image and the second image in each case for a marking area (400) with a plurality of asymmetric regions and to use it for calibration purposes.

5. Surround-view system (101) according to one of the preceding claims, wherein the control device (106) is configured to search for the marking area in any desired rotation with respect to the vehicle.

6. Surround-view system (101) according to one of the preceding claims, wherein the control device (106) is configured to determine for each marking area found in the first and second image whether the respectively found marking area is reflected or not reflected as compared to the marking area of the vehicle environment.

7. Vehicle (100) having a surround-view system (101) according to one of the preceding claims.

8. Method for calibrating a surround-view system (101) having a control device (106) according to one of Claims 1 to 6, wherein the method is performed by the control device (106), the method having the following steps:
producing a first image of a vehicle environment having a marking area with an asymmetric region for which there is no axis along which the region is mirror-symmetrical and/or for which there is no point with respect to which the region is point-symmetrical, and a second image of the vehicle environment having the marking area (S1);
searching for the marking area in the first image and in the second image (S2), wherein, in a first step of searching, a basic shape of a marking area is detected and identified and, in a second step of searching, a reflected-image indicator is checked;
calibrating the surround-view system, wherein only those marking areas found in the first and second image whose asymmetric regions are not reflected as compared to the marking area of the vehicle environment (S3) are used for calibration purposes;
wherein the control device (106) searches in the first image and the second image in each case for a marking area (300) with four marking symbols (301, 302, 303, 304) arranged in a square and the asymmetric region (305) arranged at the centre of the four marking symbols and uses it for calibration purposes.

## Revendications

1. Système de visualisation panoramique (101) pour un véhicule (100), comprenant :
une première caméra (103) pour enregistrer une première image (110) de l'environnement de véhicule (107) présentant une surface de repérage (108) avec une zone asymétrique (109) pour laquelle il n'existe aucun axe le long duquel la zone est à symétrie spéculaire, et/ou pour laquelle il n'existe aucun point par rapport auquel la zone est à symétrie ponctuelle ;
une deuxième caméra (104) pour enregistrer une deuxième image (111) de l'environnement de véhicule présentant une surface de repérage ;
un dispositif de commande (106) pour assembler les première et deuxième images et pour étalonner le système de visualisation panoramique ;
dans lequel le dispositif de commande (106) est réalisé pour chercher, en vue de l'étalonnage, la surface de repérage (108) sur la première image et la deuxième image, respectivement ;
dans lequel le dispositif de commande est réalisé pour utiliser pour l'étalonnage du système de visualisation panoramique seules celles des surfaces de repérage trouvées sur les première et deuxième images dont les zones asymétriques ne sont pas réfléchies en comparaison avec la surface de repérage de l'environnement de véhicule, et dans lequel le dispositif de commande (106) est réalisé pour chercher sur la première image et la deuxième image respectivement une surface de repérage (300) avec quatre symboles de repérage (301, 302, 303, 304) disposés en carré, ainsi qu'avec la zone asymétrique (305) disposée au centre des quatre symboles de repérage et les utiliser pour l'étalonnage.

2. Système de visualisation panoramique (101) selon la revendication 1, dans lequel le dispositif de commande (106) est réalisé pour étalonner le système de visualisation panoramique de telle sorte qu'une surface de repérage trouvée sur la première image coïncide avec une surface de repérage trouvée sur la deuxième image.

3. Système de visualisation panoramique (101) selon l'une quelconque des revendications précédentes, dans lequel le dispositif de commande (106) est réalisé pour utiliser une surface de repérage (300) avec une zone asymétrique (305) configurée sous forme de lettre, de chiffre ou de caractère spécial et l'utiliser pour l'étalonnage.

4. Système de visualisation panoramique (101) selon l'une quelconque des revendications précédentes, dans lequel le dispositif de commande (106) est réalisé pour chercher sur la première image et la deuxième image respectivement une surface de repérage (400) avec une pluralité de zones asymétriques et l'utiliser pour l'étalonnage.

5. Système de visualisation panoramique (101) selon l'une quelconque des revendications précédentes, dans lequel le dispositif de commande (106) est réalisé pour chercher la surface de repérage selon une rotation quelconque par rapport au véhicule.

6. Système de visualisation panoramique (101) selon l'une quelconque des revendications précédentes, dans lequel le dispositif de commande (106) est réalisé pour déterminer pour chaque surface de repérage trouvée sur les première et deuxième images si la surface de repérage respectivement trouvée est réfléchie ou n'est pas réfléchie en comparaison avec la surface de repérage de l'environnement de véhicule.

7. Véhicule (100) avec un système de visualisation panoramique (101) selon l'une quelconque des revendications précédentes.

8. Procédé d'étalonnage d'un système de visualisation panoramique (101) avec un dispositif de commande (106) selon l'une quelconque des revendications 1 à 6, dans lequel le procédé est effectué par le dispositif de commande (106), le procédé comprenant les étapes consistant à :
générer une première image d'un environnement de véhicule présentant une surface de repérage avec une zone asymétrique pour laquelle il n'existe aucun axe le long duquel la zone est à symétrie spéculaire, et/ou pour laquelle il n'existe aucun point par rapport auquel la zone est à symétrie ponctuelle, et une deuxième image de l'environnement de véhicule présentant une surface de repérage (S1) ;
chercher la surface de repérage sur la première image et la deuxième image (S2), dans lequel, dans une première étape de la recherche, une figure de base d'une surface de repérage est reconnue et identifiée, et dans une deuxième étape de la recherche, un indicateur d'image réfléchie est vérifié ;
étalonner le système de visualisation panoramique, dans lequel seules celles des surfaces de repérage trouvées sur les première et deuxième images sont utilisées dont les zones asymétriques ne sont pas réfléchies en comparaison avec la surface de repérage de l'environnement de véhicule (S3) ; le dispositif de commande (106) cherchant respectivement une surface de repérage (300) avec quatre symboles de repérage (301, 302, 303, 304) disposés en carré, ainsi qu'avec la zone asymétrique (305) disposée au centre des quatre symboles de repérage et les utilisant pour l'étalonnage.
